(19) Europäisches Patentamt / European Patent Office / Office européen des brevets

(11) **EP 4 563 927 A1**

(12) **EUROPEAN PATENT APPLICATION**

(43) Date of publication:
**04.06.2025 Bulletin 2025/23**

(21) Application number: **23213462.7**

(22) Date of filing: **30.11.2023**

(51) International Patent Classification (IPC):
**F28D 15/02** *(2006.01)*      **B33Y 80/00** *(2015.01)*
**F28D 15/04** *(2006.01)*      **F28F 21/08** *(2006.01)*
**F28D 7/10** *(2006.01)*      **F28D 21/00** *(2006.01)*

(52) Cooperative Patent Classification (CPC):
**F28D 15/046; B33Y 80/00; F28D 7/10;
F28D 15/0275; F28F 21/08;** F28D 2021/0054

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Technische Universiteit Eindhoven
5612 AE Eindhoven (NL)**

(72) Inventors:
• **MAASSEN, Nick
EINDHOVEN (NL)**
• **DAVALOS SEGURA, Stephanie
EINDHOVEN (NL)**

(74) Representative: **Algemeen Octrooi- en
Merkenbureau B.V.
P.O. Box 645
5600 AP Eindhoven (NL)**

(54) **HEAT PIPE**

(57)      The present invention provides a heat pipe comprising:

a. an elongate envelope encasing at or towards its first end an evaporator section, at or towards its second end a condenser section, and an adiabatic section intermediate the evaporator and condenser sections;

b. at least one first channel providing for fluid communication of an evaporated working fluid from the evaporator section to the condenser section;

c. at least one second channel providing wicking means effective for transferring a condensed working fluid from the condenser section to the evaporator section, the first and second channels communicating with each other in the condenser and in the evaporator sections of the first channel;

d. at least one coolant channel integrated within the envelope and adapted to transfer, by means of an internal flowing coolant, heat away from one or both of the first and second channels.

**EP 4 563 927 A1**

**Description**

## TECHNICAL FIELD

The present invention concerns a 3-D printed heat pipe array, its design and method of production, and its use to remove heat from high-tech devices.

## BACKGROUND

In recent years, overheating of high-tech devices has become an increasingly significant barrier to achieving the highest possible levels of operating performance.

High-tech devices thereby present a critical cooling challenge. Examples of high-tech devices that require advanced cooling include; semiconductors, IT hardware, EV power electronics, supercomputer CPUs, solid state laser diodes, gyrotrons, radar transmitters, space propulsion rockets, chemical reactors and nuclear fusion reactors, amongst others.

A performance limiting factor of such high-tech devices is the amount of heat flux that can be dissipated without overheating. The ideal operating temperature is dependent on the device being cooled. For example, in the case of semiconductor devices, such as power electronics, laser diodes and CPUs, lower temperatures are required, whilst some other devices can tolerate, or even benefit from, higher operating temperatures.

The challenge of providing effective cooling is particularly important for emerging technologies, such as nuclear fusion. Whilst, nuclear fusion occurs naturally in stars, synthetic fusion processes are challenging as they require extreme conditions. For fusion to occur, both fuel and a confined environment with sufficiently high temperature, pressure, and confinement time in order to generate a plasma, are required. Current engineering constraints make the practical applicability of nuclear fusion very challenging, as it is difficult to achieve and stably maintain the required conditions. For example, in a fusion reactor, the internal temperature would need to reach temperatures of 150,000,000 °C. Such high temperatures generate intense energy flows around the reactor walls, and without advanced cooling technologies, they are subject to rapid degradation.

The demand for electricity globally is expected to increase dramatically by up to five times by 2050, and in an increasingly climate conscious world, renewable energy sources alone are not able fully to satisfy such an increased demand of energy. Nuclear fusion power has been increasingly advocated in recent decades as one potential means to combat global warming by satisfying these demands. Fusion would also advantageously overcome the challenges presented by the nuclear waste generated by existing nuclear fission methods. If solutions to the critical cooling challenge are found, nuclear fusion could not only meet, but also exceed the world's energy needs.

In the art, cooling devices are known for complex technical devices, such as nuclear fusion reactors, for example: GB1525525 describes a method of removing heat from a nuclear fusion reactor comprising blowing bubbles of helium into a liquid coolant of the fusion reactors, thereby removing heat directly from the liquid coolant.

Heat pipes are examples of passive heat transfer devices that employ phase transition to transfer heat between two interfaces. Heat pipes rely on two phase cooling and capillary flow inside a closed envelope and effectively function as thermal superconductors. A typical heat pipe consists of a sealed pipe or tube made of a material that is compatible with the working fluid contained within the pipe. Due to high heat transfer coefficients for boiling and condensation, heat pipes are highly effective thermal conductors.

In the art, heat pipes are known as heat transfer devices that employ phase transition:

US2007114008 describes a heat pipe comprising, a casing containing a working fluid, a capillary wick arranged in an inside of the casing, and a tube disposed in the inside of the casing and contacting with a surface of the capillary wick. The vapor passage is formed on the inside of the casing and a liquid channel is defined by the capillary wick, wherein the vapor passage is separated from the capillary wick by the tube. The working fluid in vapor and liquid states, respectively, flows along the vapor passage and the liquid channel from one end towards an opposing end of the casing in opposite directions.

US2020064078 describes a flow-boiling canopy wick employing film evaporation and a perforated distribution layer separating the liquid stream from the vapor space. The wick enables controlled evaporation of a liquid film at the point of critical heat flux, by maintaining a constant supply of liquid to the heated surface.

Additive manufacturing processes, sometimes termed layered manufacturing in reference to the nature of the process, are where a part is fabricated layer-by-layer from three-dimensional (3-D) data. Additive manufacturing systems may be used to produce geometrically complex three-dimensional (3-D) objects by building up layers of material gradually. Some additive manufacturing systems use inkjet or other similar printing technologies to apply some of the manufacturing materials. As a result these methods are generally referred to as 3-D printing. Additive manufacturing devices are able to make it possible to convert a computer-aided design (CAD) model or other digital representation of an object directly into the physical object using a variety of different materials. Selective laser melting and selective laser sintering are examples of additive manufacturing techniques employed to produce complex metal structures from loose metal powder using a high powered laser to selectively melt or sinter pre-laid powder material. Selective laser techniques enable the production of metal structures with a high resolution, which is essential for the production of heat pipes.

In the art, additive manufacturing techniques, such as selective laser melting, are known for producing technical objects:

WO2016113255 describes a method for producing 3-D components using selective laser melting, whereby successive layers of a powder construction material are solidified by means of electromagnetic radiation, such as a laser or an electron beam.

WO2022119559 describes an additive manufacturing system comprising: an additive manufacturing device to form a 3-D printed object with regions of differing porosity, and a controller to form the object. The system produces the object by controlling ejection of a first binding agent on a porous region and a non-porous region of the object, and controlling ejection of a second binding agent on the non-porous region of the object.

In the art, 3-D printing of heat transfer devices such as heat pipes and other thermal management systems are known:

US20170235349 describes a thermal management system for an electronic device such as a microprocessor, produced by 3-D printing. The thermal management device is made up of a single contiguous component comprising two heat exchangers, wherein the first heat exchanger comprises a vapor chamber, a heat pipe, or the vapor chamber and the heat pipe, and the second heat exchanger comprises a heat sink, the heat sink comprising fins extending away from an external surface of the vapor chamber, the heat pipe, or the vapor chamber and the heat pipe.

CN111660062 describes a high-temperature heat pipe produced using 3-D printing and a method for producing it. The heat pipe comprises a shell with channels in the inner wall, a silk screen fixed to a porous support, a tail cover and an alkali metal working medium, wherein the shell with the channels and the porous support are formed in situ at a time through 3-D printing. The shell and the tail cover plate are made of high-temperature alloy or niobium alloy, the porous support and the silk screen are made of molybdenum-based materials, and the shell structure and a porous structure are synchronously printed.

However, to date, none of the prior art satisfactorily provides a system that is capable of dissipating the highest possible amount of heat flux, by combining both the reliability and efficiency of heat pipes and the versatility of additive manufacturing, let alone providing a system capable of providing advanced cooling that would enable prolonged operation of high-tech devices such as electronic components, semiconductors, IT hardware and nuclear fusion reactors, for example.

## SUMMARY OF THE INVENTION

According to the present invention there is provided a heat pipe comprising:

a. an elongate envelope encasing at or towards its first end an evaporator section, at or towards its second end a condenser section, and an adiabatic section intermediate the evaporator and condenser sections;
b. at least one first channel providing for fluid communication of an evaporated working fluid from the evaporator section to the condenser section;
c. at least one second channel providing wicking means effective for transferring a condensed working fluid from the condenser section to the evaporator section, the first and second channels communicating with each other in the condenser and in the evaporator sections of the first channel;
d. at least one coolant channel integrated within the envelope and adapted to transfer, by means of an internal flowing coolant, heat away from one or both of the first and second channels.

Preferably the first and second channels do not communicate with each other in the adiabatic section of the first channel, thus negating any limitation on effectiveness caused by the entrainment limit as between the counter-flowing evaporated and condensed working fluids.

Preferably a multiplicity of second channels are provided, and preferably in that case the multiplicity of second channels communicate with the evaporator section of the first channel independently from each other. This separation of wicked flows avoids stagnation points in the evaporator region and consequently increases the boiling limit.

Also advantageously, the second channel wicking means may be provided with a porous structure, increasing the capillary limit and/or boiling limit of the system. Typically the porous structure may be provided in the second channel in the region of its communication with the first channel in the evaporator section, and the second channel may be absent porous structure along at least part of its length from the evaporator section towards or including the regions of its communication with the first channel in the condenser section.

The porous structure may be provided during or as a result of the manufacturing process. Through additive manufacturing processes, such as selective laser melting, which use a fine powder that may be locally and selectively melted, the fine power may be trapped in the second channel. In a particular embodiment of the invention, the porous structure of the second channel wicking means may be created by precision sintering or melting metal build powder particles deposited on at least some of the interior of the second channel. Such precision sintered or melted porous structures may transport the working fluid by capillary action from the condenser section to the evaporator section.

Preferably, the average pore size of the porous structure of the second channel wicking means may be equal to or smaller than the diameter of the second channel in the condenser and/or adiabatic sections. Preferably, the average pore size of the porous structure of the second channel wicking means is smaller than the diameter of the second channel in the evaporator section. In some embodiments, the average pore size of the porous structure of the second channel wicking means may be larger in the condenser section than in the evaporator section. Advantageously, by having a smaller average pore size in the evaporator section than in the condenser section, capillary action draws working fluid to the evaporator section, which prevents the heat pipe drying out.

The heat pipe of the invention may be produced by additive manufacturing (also known as 3-D printing) methods, and this is an important aspect of preference which will be described below. Essentially, additive manufacturing allows somewhat complicated internal structure within each heat pipe (and in any array of such heat pipes) to be manufactured with relative ease, allowing optimised forms of structure as described herein to be produced.

One exemplary additive manufacturing technique suitable for production of the inventive heat pipe comprises selective laser melting.

The heat pipe may be manufactured from any suitable material, for example from one or more of steel, Inconel, Hastelloy, Monel, Haynes, aluminium, copper, nickel, titanium, niobium, tantalum, molybdenum, zirconium, tungsten or rhenium, or any compatible alloy or any compatible carbide of one or more of the aforesaid.

The working fluid may for example be selected from any of water, ammonia, sodium, lithium, helium, hydrogen, neon, nitrogen, oxygen, methane, ethane, propylene, 1,1,1,2-tetrafluoroethane (R134a), freon compounds, acetone, methanol, toluene, naphthalene, aluminium bromide, mercury, caesium, potassium, eutectic sodium-potassium or silver. In preferred embodiments the working fluid may be selected from water, ammonia, sodium or lithium.

In operation the at least one integrated cooling channel contains a coolant, optionally selected from molten salts, liquid metals, inert gases, or molecular fluids. In some embodiments the coolant may be the same as the working fluid.

The heat pipe may be used to provide cooling to a flat or curved surface, by being arranged as an array comprising a multiplicity of the heat pipes.

In embodiments where the heated surface is flat, heat pipes may be arranged substantially perpendicularly with respect to the surface.

In embodiments where the heated surface is curved, heat pipes may be arranged substantially radially with respect to the surface.

In embodiments where the heated surface is flat, the first channels of the heat pipes may be curved at least in their adiabatic regions, in order to provide optimum transfer of heat, the heat flux dissipating away from the flat surface in both plane and perpendicular directions. In such embodiments, the length of the adiabatic section of the heat pipe is directly proportional to the width of the heat pipe array.

Advantageously, where the length of the adiabatic section of the heat pipe is directly proportional to the width of the heat pipe array, this is directly related to the performance of the heat pipes, allowing for tailoring and optimisation of the array to the application. A further advantage is that the adiabatic sections themselves, as they disperse from one another, provide space within the interstices between them for the integrated coolant channels.

Importantly, the invention provides a heat pipe array comprising an ordered plurality of heat pipes according to the aforesaid.

Preferably, in a such an array a single envelope encases a plurality of first, second and integrated coolant channels.

The at least one integrated coolant channel may run between neighbouring heat pipes comprised within the heat pipe array.

Preferably the envelope comprise at least one inlet adapted to supply coolant to a multiplicity of coolant channels within the envelope, and at least one outlet adapted to recover coolant from a multiplicity of coolant channels.

Neighbouring evaporator sections may be arranged in a plane such that the array is adapted to remove heat from a flat surface, in which case the first channels may be curved at least in their adiabatic regions, in order to provide optimum transfer of heat, the heat flux dissipating away from the flat surface in both plane and perpendicular directions.

Alternatively, neighbouring evaporator sections may be arranged in an arch such that the array is adapted to remove heat from a curved surface, in which case the first channels may be substantially straight at least in their adiabatic regions.

The optimal geometry for a heat pipe comprised within a heat pipe array providing cooling to a flat surface has been found to be wherein the ratio of the average length of the adiabatic section of each heat pipe in the array to the collective width of the heat pipe array is as low as possible, as this provides space within the interstices between neighbouring heat pipes for the coolant channels. Preferably this ratio is lower than about 1, optionally lower than about 0.9, optionally lower than about 0.8, optionally lower than about 0.7. In some embodiments the ratio may from about 0.5 to about 1, for example from about 0.6 to about 0.9 or from about 0.6 to about 0.8.

Advantageously, this geometry provides space within the interstices between heat pipes for the coolant channels, allowing for effective heat removal. For instance, by merging two adjacent rows of heat pipes into a single row, and concurrently rotating each of the second channels by 60 degrees, space may be created between the heat pipes, into which the coolant channels may be located.

Consequently, in one of its aspects the invention provides a heat pipe array, comprising a plurality of heat pipes, each pipe further comprising;

integrated cooling channels;
separation of the liquid flow from the vapor flow;
separation of the individual liquid flows; and
freeform porous structures within the evaporator wick,

wherein the heat pipe array is contained within a single component.

Inclusion of multiple heat pipes with integrated cooling channels into a single component is advantageous as it allows for optimization for the capillary and/or boiling limit. Separation of the liquid flow from the vapor flow in the adiabatic section allows the heat pipe to circumvent the entrainment limit. Separation of the liquid flows from one another is advantageous as it avoids stagnation points in order to defer the boiling limit. Inclusion of freeform porous structures in the evaporator wick to trap and sinter powder is advantageous as it increases the capillary and/or boiling limit.

Heat pipes rely on two phase cooling and capillary flow inside a closed envelope and thereby effectively function as thermal superconductors. By closely arranging (stacking) heat pipes near a surface that receives an intense heat flux, such as, for example, the internal wall of a nuclear fusion reactor, a semi conductor device, the microwave cavity of a gyrotron, the throat of a rocket nozzle, the leading edge of a hypersonic aircraft, or the target/source of high-energy beam, while dispersing them further away from this surface, the heat flux is reduced until it reaches a level where it can be transferred to conventional single phase cooling channels and removed, thereby cooling the device.

The heat pipe array of the present invention provides a means for extremely high heat fluxes to be transformed to more manageable heat fluxes, whereby a single phase coolant is able to absorb the residual heat, all with the same effort of installation and operation as in conventional single phase cooling systems.

It will be apparent that as is the case in relation to the heat pipe itself, in particular embodiments of the present invention the heat pipe array may be produced by additive manufacturing methods, such as selective laser melting. The complex structure of the inventive array with integrated coolant channels is illustrated and described below and its realisation is particularly facilitated by additive manufacturing methods.

In particular embodiments of the present invention, each heat pipe in the array comprises an evaporator, an adiabatic section, a condenser, a working fluid and a coolant, all encased within a common envelope.

In preferred embodiments the heat pipe array may comprise ammonia-aluminium, ammonia-stainless steel, water-titanium, water-copper, water-inconel, sodium-stainless steel, sodium-Inconel, sodium-molybdenum, sodium-tungsten, lithium-molybdenum or lithium-tungsten heat pipes. In most preferred embodiments the heat pipe array may comprise Lithium-Tungsten heat pipes.

According to a second aspect of the present invention there is provided a method for producing a heat pipe array according to the claims, wherein the heat pipes are produced using additive manufacturing.

Advantageously, additive manufacturing methods, such as selective laser melting or 3-D printing, allow an array of complex optimized heat pipes to be integrated into a single component constructed from a high performance material. Additive manufacturing methods are reliable and produce more consistent results.

According to a third aspect of the present invention there is provided a heat pipe array, comprising a plurality of heat pipes, wherein the heat pipes follow circle arcs, and the cooling channels follow half ellipses.

In particular embodiments, the heat pipe array comprises heat pipes that further comprise; integrated cooling channels, separation of the liquid and vapor flows, separation of the individual liquid flows, and freeform porous structures within the evaporator, wherein the heat pipe array is contained within a single component.

In further embodiments of the heat pipe array, the width of the heat pipe is proportional to the length of the adiabatic section of the heat pipe.

Advantageously, when the width is proportional to the height of the adiabatic section L, this is directly related to the performance of the heat pipes. Therefore, the invention according to the third aspect of the present invention provides a means of tailoring the performance of the heat pipe to the application.

In particular embodiments, the heat pipe array is orientated downwards.

Advantageously, it has been found that when the heat pipe array is orientated downwards, a higher level of performance may be achieved, and in this orientation, when the heat pipe is gravity assisted it may significantly outperform other state of the art cooling technologies.

According to a third aspect of the present invention there is provided use of the heat pipe array to provide cooling for a device.

In particular embodiments of the present invention, the device may be a nuclear fusion reactor, an electrical component, a semiconductor, IT hardware, a solid state laser, a radar transmitter, a 5G/6G emitter antenna, a supercomputer, a hypersonic aircraft or missile, a gyrotron, a particle accelerator, power electronics or a rocket system.

## DETAILED DESCRIPTION

Heat pipes are closed, passive systems, that rely on the gas-liquid phase transition combined with the capillary pressure of a working fluid, that are able to handle extremely high heat fluxes. Heat pipes function as heat flux transformers, transforming a high heat flux from a heated surface to a lower heat flux over a larger surface area from which the cooling channels are able to absorb and remove the heat efficiently.

Additive manufacturing methods, such as selective laser melting and 3-D printing, allow an array of heat pipes with integrated cooling channels to be produced as a single component.

The section of the heat pipes in contact with the heated surface is called the evaporator section, the section in contact with the cooling channels, the condenser section, and the section in between where the heat pipes disperse, the adiabatic section.

The heat pipe performance depends strongly on its geometry. Preferably, the heat pipes may be placed perpendicular to the heated surface, enabling the maximum number of heat pipes to be employed to cool the surface. Furthermore, the cooling channels may be placed as close to the heated surface as possible for maximum efficiency, but, in order to make space for them, the heat pipes have to disperse as they move away from the heated surface. In the case of a curved heated surface, such as a cylinder, straight heat pipes disperse naturally, but for a flat heated surface the heat pipes themselves need to be curved in order to disperse. This constrains the width of the heat pipe array, but the length may be arbitrarily long, effectively allowing a heated surface in the shape of a strip to be cooled.

The size of the heat pipes may be independent from that of the cooling system, which allows them to be optimized for different purposes.

The liquid and vapour flows in the heat pipes may be separated to circumvent the entrainment limit, and their respective channels are called arteries and vapour cores, both of which may be optimized independently from one another. The entrainment limit is reached when the vapor velocity in the heat pipe is high enough to shear liquid from the wick.

The heat pipe is filled with a working fluid. The liquid and vapour flows in the heat pipes may be separated to circumvent the entrainment limit, and their respective channels may be known as arteries and vapour cores. Each of these sections may be optimized independently.

The evaporators are the most critical section of the heat pipe array, because if dry-out occurs the evaporator is affected first. For structural integrity, the vapour cores may be designed with spherical end caps to withstand the internal pressure of the heat pipes. Evaporation takes place at the interface between the liquid and vapour phases, where the wick is exposed to the vapour core. The wick connects the arteries to these pores through a branching network of channels that gradually decrease in diameter from the arteries to the vapour core. The interface between the liquid and vapour phases in the evaporator may comprise numerous pores to generate or control capillary pressure.

The incoming heat flux may be conducted by a matrix consisting of the solid wick and the liquid phase before it reaches the liquid-vapour interface. If the heat flux is too high, superheating may cause the liquid phase to boil. The boiling limit may be increased by decreasing the thermal resistance of the matrix, which may be realized by minimizing the thickness of the wick and by selecting envelope materials and working fluids with high thermal conductivities. Once the heat flux reaches the interface, it is absorbed by the phase transformation of liquid to vapour accompanied by a corresponding mass flow from the evaporator to the condenser.

The heat pipes may be densely packed in a geometric (e.g. hexagonal) arrangement, where vapour cores occupy the centres of regular geometrical shapes (e.g. hexagons) and arteries occupy the interstices between them (e.g. the corners). In such an arrangement, each heat pipe consists of two arteries, connected to a single vapour core. The arteries and vapour cores may be separated by the minimum wall thickness, which is restricted by the additive manufacturing process. Each heat pipe may occupy the area covered by one hexagon.

The adiabatic section of a curved heated surface may be straight, as the heat pipes are dispersed naturally by extending directly perpendicular to the heated surface. However, for a flat heated surface the geometry may be more complex, and may curve as the pipe extends away from the surface. The heat pipe array may be of any arbitrary length, but due to the dispersion of heat pipes in the adiabatic section, its width W may be limited. The adiabatic sections of the plurality of heat pipes in an array disperse as distance from the heated surface increases, advantageously providing space for the coolant channels to pass between the induvial heat pipes comprised within the array.

In some embodiments of the invention, the width of the heat pipe array may be proportional to the height of the adiabatic section of the heat pipes, which is directly related to the performance of the heat pipes.

For a flat heated surface, a heat pipe array comprising a plurality of heat pipes, may comprise heat pipes that follow circle arcs, and cooling channels that follow half ellipses. In such an embodiment, the heat pipes may follow circle arcs, with the cooling channels following half ellipses with a constant length over width ratio.

In such embodiments, the first channels of the heat pipes may be curved at least in their adiabatic regions, in order to provide optimum transfer of heat, the heat flux dissipating away from the flat surface in both plane and perpendicular directions. In such embodiments, the length of the adiabatic section of the heat pipe is directly proportional to the width of the heat pipe array.

Preferably the ratio of the length of the adiabatic section of the heat pipe to the width of the heat pipe array is as low as possible. Most preferably, the ratio of the length of the adiabatic section of the heat pipe to the width of the heat pipe array may be lower than about 1, optionally lower than about 0.9, optionally lower than 0.8, optionally lower than about 0.7.

In a specific embodiment the ratio of the length of the adiabatic section of the heat pipe to the width of the heat pipe array may be about 0.778.

Each heat pipe may be somewhat flattened at least in its condenser section to maximise heat transfer. In this case, the heat pipes may be arranged axially with respect to the heated surface such that the flattened sections present between themselves additional space for insertion of cooling channels.

The condenser section starts where the first cooling channel is inserted. The condenser is not as critical as the evaporation section as the heat pipes continue to disperse outward to increase contact area with the cooling channels as far as may be required. Further into the condenser section, the heat pipes may be widened to create maximum contact area with the cooling channels, resulting in a circular sector pattern. The vapour condenses on the cooled surfaces and a wick draws in the liquid phase and transports it with minimal resistance through a branching network to the arteries, where it is transported to the evaporator section

In the condenser section the heat pipes may no not be cylindrical, they may be flattened to increase the surface area for cooling. Struts may connect the two cooled surfaces in contact with the cooling channels to provide structural integrity.

In order to ensure permanent priming of the evaporator wick, the average pore size of the wicking means may equal or be smaller than the artery diameter in the condenser and/or adiabatic sections. The average pore size of the wicking means is preferentially smaller than the artery diameter in the evaporator section.

The heat pipes of the heat pipe array primarily consist of three materials, namely the working fluid, the envelope, and the coolant.

The working fluid determines the critical heat flux of the heat pipes. A working fluid may be operated at any temperature between the triple point and the critical point. However, a vapour pressure near the triple point of the working fluid would be insufficient to transfer significant heat fluxes, and the distinction between the liquid and vapour phases vanishes near the critical point. The working fluid's relevant physical properties are a function of temperature and so are dependent on the desired operating temperature. These properties are surface tension, latent heat, viscosity, density, vapour pressure and thermal conductivity.

The working fluid may for example be selected from any of helium, hydrogen, neon, nitrogen, oxygen, methane, ethane, propylene, 1,1,1,2-tetrafluoroethane (R134a), freon compounds, acetone, methanol, toluene, naphthalene, aluminium bromide, mercury, caesium, potassium, eutectic sodium-potassium or silver. In preferred embodiments of the present invention, the working fluid may be selected from water, ammonia, sodium or lithium.

Liquid metals such as lithium have the highest performance of any heat pipe working fluid. However, only refractory metals such as molybdenum can resist liquid lithium at the operating temperature of 1300°C, and these are difficult to manufacture and have limited design freedom for optimization.

The amount of heat flux that can be handled by a heat pipe is limited by the capillary and the boiling limits. These limits are critical, which means that once crossed, the heat pipes dry out locally and stop functioning. The boiling limit is difficult to determine theoretically due to dependence on microscopic surface properties that are intrinsic to the manufacturing process.

Two design concepts can be implemented to alter the critical heat flux.

The first addresses the boiling limit by realizing that the boiling phenomenon always starts at the point where the liquid is in contact with the envelope of the evaporator for the longest amount of time because there the superheat is highest. Stagnation points should therefore be avoided as the superheat of the liquid at these points is only removed through conduction. In particular embodiments of the present invention, the heat pipe may be symmetric in the evaporator section. In such embodiments, the liquid flows from the two arteries towards the plane of symmetry. Any liquid at this plane would form a stagnation point, so the envelope may be extended to the vapour core to separate the liquid flows and avoid the unfavourable stagnation points.

The second design concept addresses the capillary and/or boiling limit by realizing that it is directly related to the average pore size in the evaporator. A finer average pore size means higher capillary pressure, but there is a minimum channel diameter that can reliably be achieved by additive manufacturing through selective laser melting. Any smaller diameter and the powder cannot always be extracted. However, this trapped powder can be an advantage if it can be controlled, because once sintered together it becomes a porous structure with a very fine average pore size, much smaller than can be achieved through determined channels. According to the present invention, freeform porous structures are introduced in the evaporator wick that trap powder so it can later be sintered to form a fine porous structure.

The envelope provides direct thermal contact between the heated surface and the evaporator, and between the condenser and the cooling channels, whilst also preventing rupturing of the heat pipes. The envelope may be made of materials with a high thermal conductivity or yield stress. Materials with a high yield stress may have thin walls in which case thermal conductivity is less relevant, and vice versa materials with high thermal conductivity may not need a high yield stress because they may have thick walls. Besides these properties, the envelope material should also be compatible with the working fluid and the additive manufacturing process.

In particular embodiments of the present invention, the envelope may be manufactured from any suitable material, for example from one or more of steel, Inconel, Hastelloy, Monel, Haynes, aluminium, copper, nickel, titanium, niobium, tantalum, molybdenum, zirconium, tungsten or rhenium, or any compatible alloy or any compatible carbide of one or more of the aforesaid.

The best envelope material is dependent on the working fluid used, as some are incompatible with one another. Suitable envelope materials for an ammonia working fluid are (stainless) steel, aluminium and nickel. For a water working fluid, nickel, copper, Inconel and titanium are suitable; for a sodium working fluid, stainless steel, nickel, Inconel, Hastelloy or the refractory metals are suitable, while for a lithium working fluid only the refractory metals are suitable, such as niobium, tantalum, molybdenum, tungsten and rhenium.

In preferred embodiments the working fluid-envelope combination may comprise ammonia-aluminium, ammonia-stainless steel, water-titanium, water-copper, water-inconel, sodium-stainless steel, sodium-Inconel, sodium-molybdenum, sodium-tungsten, lithium-molybdenum or lithium-tungsten.

The coolant flows through the cooling channels to absorb the heat released by the condenser and transport it away from the heat pipe array. In order to maintain the heat pipe array at a uniform temperature whilst also avoiding excessive pressure drops, the coolant should have a high specific heat capacity and a low viscosity. It also needs to be compatible with the envelope material. In the presence of a magnetic field magnetohydrodynamic drag should also be considered for electrically conductive fluids such as liquid metals.

If the heat pipe charged with an electrically conductive working fluid, such as a liquid metal, is maintained in the presence of a magnetic field, then the liquid phase can be pumped by driving a current through the heat pipe using the Lorentz force. This effect can assist the performance of the heat pipe.

In particular embodiments of the present invention, the coolant may be the same as the working fluid.

In further embodiments of the present invention the coolant may be selected from molten salts, liquid metals, inert gases, or molecular fluids, such as water, glycol or silicon oil.

The heat pipes may be used for an array of cooling applications. Semiconductor dies are typically square and smaller than the width of a 3D-printed heat pipe array, which makes them very well suited for a row of them to be cooled, for example by an ammonia or water combination. The liquid metal heat pipes array may be used in vacuum or low pressure plasma environments where they are subjected to intense beams, such as laser, electron or particle beams. They may also be to cool fission or fusion nuclear reactors.

The 3D-printed heat pipe array can be made from a variety of material combinations, from molecular liquids to liquid metals, in order to provide solutions tailored to different temperature range requirements. Advantageously, they also contain no moving parts so there is little risk of sudden failure, thereby providing improved reliability.

The invention will now be more particularly described with reference to the following examples and figures, in which;

Figure 1 illustrates a single heat pipe (absent the encasing envelope), according to an embodiment of the invention.
Figure 2 illustrates an array of heat pipes and coolant channels (absent the encasing envelope), according to an embodiment of the invention.
Figure 3 illustrates a simplified cross section of the evaporator section of a heat pipe, according to an embodiment of the invention.

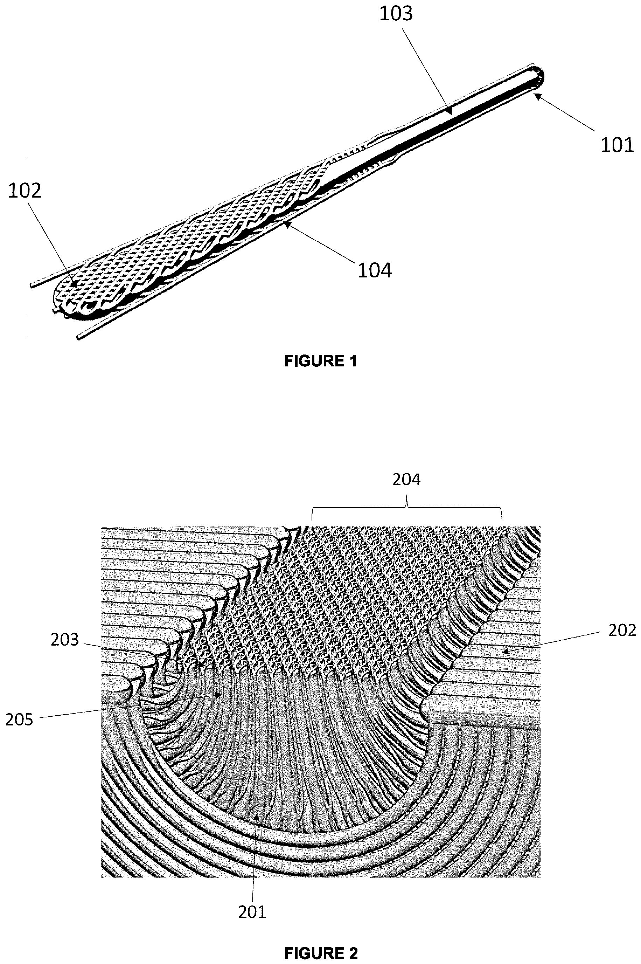

Referring to Figure 1, there is shown a single heat pipe (absent the encasing envelope). The evaporator section (101) is linked to the condenser section (102) by the adiabatic section (103). The working fluid evaporates from a liquid in the evaporator section (101) to a gas, which passes through the adiabatic section (103) to the condenser section (102), in which the gas condenses to a liquid. The liquid is returned to the evaporator (101) by the arteries (104) which are separated from the other liquid flows.

Referring to Figure 2, there is shown an array of heat pipes and coolant channels (absent the encasing envelope) for removing the heat flux from a flat surface. The array consists of a multiplicity of heat pipes (201). The heat pipes (201) comprise an evaporator section (203), and the evaporators of the array form a plane (204) from which heat flux is removed. The heat pipes (201) additionally comprise arteries (205), which transport condensed working fluid from the condenser section to the evaporator section (203). The arteries (205) are external to the individual heat pipes (201). The heat pipe (201) array removes heat flux from the plane, and the heat is transferred from the condenser section to coolant channels (202). The coolant channels (202) are integrated into the heat pipe array to provide optimum heat removal.

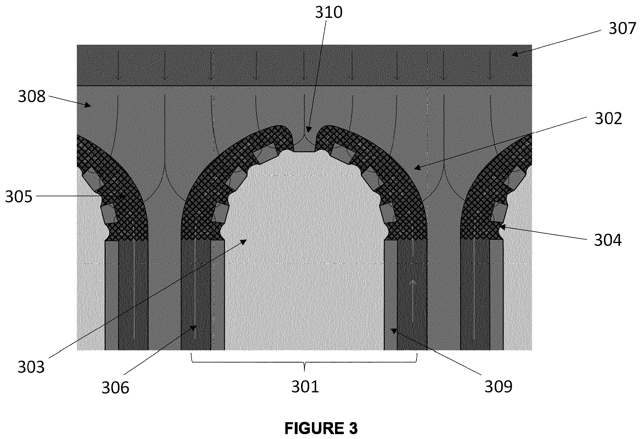

Referring to Figure 3, there is shown a simplified cross section of the evaporator section of a heat pipe (301). The evaporators are where evaporation takes place, at the interface between the liquid and vapour phases, where the wick (302) is exposed to the vapour core (303). The liquid-vapour interface (304) consists of numerous pores to generate capillary pressure. The wick (302) further comprises a matrix of freeform porous structures (305). The wick (302) connects the arteries (306) to the liquid-vapour interface (304) through a branching network of channels that gradually decrease in diameter from the arteries (306) to the vapour core. The heat flux of a heated surface (307), is conducted by the envelope (308) and then by a matrix (305) consisting of the solid wick and the liquid phase to the liquid-vapour interface.. Once the heat flux reaches the liquid-vapour interface (304) within the evaporator wick (302), it is absorbed by the phase transformation of the working fluid from liquid to vapour accompanied by the corresponding mass flow from the evaporator wick (302) towards the condenser. The heat pipes (301) are densely packed in a hexagonal arrangement, and the evaporator comprises two arteries (306) connected to a single vapour core (303). The arteries (306) and vapour cores (303) are separated, therefore separating the liquid and vapour flows by a thin wall (309). The individual arteries (306) do not join at the centre (310), and are separated by the walls of the matrix.

## EXAMPLES

### Example 1

A prototype water-titanium heat pipe has been designed with optimum parameters and several further prototypes with variations on the theoretical optimum have been manufactured and tested for the critical heat flux.

Using a Design of Experiments approach, a critical heat flux was calculated for multiple variations of the artery and vapour core diameters for a 20 mm wide heat pipe array. The theoretical optimum and suboptimal parameter combinations were identified and thirteen single heat pipes with varying dimensions were manufactured. The envelope was made from titanium, and the working fluid was water. Single heat pipes were chosen for the experiment, because all heat pipes in a 3D-printed Heat Pipe Array are identical and therefore a single heat pipe can represent the entire array.

The 13 heat pipes were analysed by CT-scanning, which identified that the all of the heat pipes were completely filled with residual powder leftover from the manufacturing process, except heat pipes 2 and 6, which were only partially filled with powder in the evaporator. These two heat pipes were selected for further testing.

The heat pipes were tested using calorimetry. AlNiCo magnets were attached to the side of the heat pipes where the heat flux enters, and the magnets were placed in an induction heater to simulate the heat flux. The heat flux was conducted to the heat pipe which distributed the heat over its length.

A constant flow of coolant, ethylene glycol, was passed along the back of the heat pipe to absorb and remove the heat. The coolant was provided from a temperature conditioned reservoir with an adjustable pump. The pressure was monitored and kept constant, in order to maintain a constant flow. A flow meter was attached to the heat pipe, where the coolant leaves the pipe to return to the reservoir. The flow meter inputted a known amount of heat $P_{fm}$= 6.765 W into the coolant and the temperature difference between the inlet and outlet of both the heat pipe $\Delta T_{hp}$ and flow meter $\Delta T_{fm}$ was measured. The following equation (I) relating internal energy was used to determine the temperature difference:

$$E = mc\Delta T \qquad \text{(I)}$$

The equation was differentiated to time and rewritten to yield, equation (II)

$$\dot{m}c = P_{hp}/\Delta T_{hp} = P_{fm}/\Delta T_{fm} \quad \text{(II)}$$

This is possible because both the mass flow $\dot{m}$, and the specific heat capacity $c$ are equal in the heat pipe and flow meter.

The heat flux $Q$ was determined by dividing the heat pipe power $P_{hp}$ by the cross-section $A$ the single heat pipe would occupy in the 3D-printed Heat Pipe Array, according to equation (III), and taking into account the heat lost to the environment:

$$Q = P_{hp}/A = \frac{\Delta T_{hp}}{\Delta T_{fm}}\frac{P_{fm}}{A} = \frac{\Delta T_{hp,on}-\Delta T_{hp,off}}{\Delta T_{fm,on}-\Delta T_{fm,off}}\frac{P_{fm}}{A} \quad \text{(III)}$$

In the experiment, the induction heater power is first increased until dry out occurs in the heat pipe, which is detected by a sudden increase in the temperature of the magnet. Subsequently, both the induction heater and the flow meter were switched on and the induction heater was operated just below the dry out point. Once a steady state was reached $\Delta T_{hp,on}$ and $\Delta T_{fm,on}$ were recorded. Then, both the induction heater and the flow meter were switched off and once steady state was reached again, $\Delta T_{hp,off}$ and $\Delta T_{fm,off}$ were measured.

The two functional single heat pipes were measured vertically with gravity either assisting or counteracting flow, to obtain a total of four measurements. The results of these measurements are tabulated below.

| Critical heat flux @ 130°C | Heat pipe 2 | Heat pipe 6 |
|---|---|---|
| Cross-section | 3.2 mm$^2$ | 4.63 mm$^2$ |
| Gravity assisted | 3.9 W/mm$^2$ | 8.9 W/mm$^2$ |
| Gravity counteracted | 1.1 W/mm$^2$ | 1.6 W/mm$^2$ |

The experiment identified that gravity played an important role in performance of the heat pipe. Therefore, whenever possible, the 3D-printed Heat Pipe Array should be oriented downward for maximum performance. The experiment also identified a significant deviation between the theoretical and experimental results, which was due to the powder influencing the internal flow of the heat pipe. Even so, with counteracting gravity the 3D-printed Heat Pipe Array was comparable to other state of the art cooling technologies, such as direct water and jet impingement cooling, and when gravity assisted it significantly outperformed them.

A further experiment was carried out with copies of heat pipe 2 and 6 that were completely de-powdered. These de-powdered heat pipes showed somewhat poorer performance than original heat pipes 2 and 6, indicating that the presence of some powder in the evaporator wick increases the critical heat flux that can be removed by the heat pipe.

**Example 2**

A 3D-printed lithium-molybdenum heat pipe that can handle the heat flux requirements for high-temperature devices has been designed and subjected to testing.

In order to investigate whether molybdenum could be 3D-printed leak tight, 13 cylinders were produced with wall thicknesses of 1 to 2 mm in different orientations. The cylinders were vacuum brazed to stainless steel tubes with pure copper. To these tubes standard Swagelok compression fittings were attached with which they could be connected to a helium leak tester.

The helium leak tests identified that all of the cylinders were completely leak tight down to the detector limit of $2.5 \cdot 10^{-12}$ mbarL/s. This corresponds to a maximum hole size of 1 Ångström, which is smaller than a helium atom, for helium, the smallest single atom, demonstrating that 3D-printed molybdenum is suitable as envelope for liquid lithium in a heat pipe.

**Claims**

1. A heat pipe comprising:

   a. an elongate envelope encasing at or towards its first end an evaporator section, at or towards its second end a condenser section, and an adiabatic section intermediate the evaporator and condenser sections;
   b. at least one first channel providing for fluid communication of an evaporated working fluid from the evaporator section to the condenser section;
   c. at least one second channel providing wicking means effective for transferring a condensed working fluid from the condenser section to the evaporator section, the first and second channels communicating with each other in the condenser and in the evaporator sections of the first channel;
   d. at least one coolant channel integrated within the envelope and adapted to transfer, by means of an internal flowing coolant, heat away from one or both of the first and second channels.

2. The heat pipe according to claim 1 wherein the first and second channels do not communicate with each other in the adiabatic section of the first channel.

3. The heat pipe according to claim 2 wherein a multiplicity of second channels are provided.

4. The heat pipe according to claim 3 wherein the multiplicity of second channels communicate with the evaporator section of the first channel independently from each other.

5. The heat pipe according to any one of claims 1 to 4 wherein the second channel wicking means are provided with a porous structure.

6. The heat pipe according to claim 5 wherein the porous structure is provided in the second channel in the regions of its communication with the first channel in the evaporator section.

7. The heat pipe according to claim 6 wherein the second channel is absent porous structure along at least part of its length from the evaporator section towards or including the regions of its communication with the first channel in the condenser section.

8. The heat pipe according to any one of claims 5 to 7 wherein the average pore size of the porous structure of the second channel wicking means may be equal to or smaller than the diameter of the second channel in the condenser and/or adiabatic sections.

9. The heat pipe according to any one of claims 5 to 8 wherein the average pore size of the porous structure of the second channel wicking means is smaller than the diameter of the second channel in the evaporator section.

10. The heat pipe according to any one of claims 1 to 9, produced by additive manufacturing.

11. The heat pipe according to claim 10, being produced using selective laser melting.

12. The heat pipe according to any one of claims 1 to 11, manufactured from one or more of steel, Inconel, Hastelloy, Monel, Haynes, aluminium, copper, nickel, titanium, niobium, tantalum, molybdenum, zirconium, tungsten or rhenium, or any compatible alloy or carbide of one or more of the aforesaid.

13. The heat pipe according to any one of claims 1 to 12, containing a working fluid, optionally selected from water, ammonia, sodium, lithium, helium, hydrogen, neon, nitrogen, oxygen, methane, ethane, propylene, 1,1,1,2-tetrafluoroethane (R134a), freon compounds, acetone, methanol, toluene, naphthalene, aluminium bromide, mercury, caesium, potassium, eutectic sodium-potassium or silver.

14. The heat pipe according to any one of claims 1 to 13 wherein the at least one integrated cooling channel contains a coolant, optionally selected from molten salts, liquid metals, inert gases, or molecular fluids.

15. The heat pipe according to any one of claims 1 to 14, wherein ratio of the width of the heat pipe to the length of the adiabatic section of the heat pipe is from about 0.5 to about 1, optionally from about 0.6 to about 0.9, optionally from about 0.7 to about 0.8.

16. A heat pipe array comprising an ordered plurality of heat pipes according to any one of claims 1 to 15.

17. The heat pipe array according to claim 16 wherein a single envelope encases a plurality of first, second and integrated coolant channels.

18. The heat pipe array according to claim 17 wherein the envelope comprises at least one inlet adapted to supply coolant to a multiplicity of coolant channels within the envelope, and at least one outlet adapted to recover coolant from a multiplicity of coolant channels.

19. The heat pipe array according to any one of claims 16 to 18 wherein at least one integrated coolant channel runs between neighbouring first and/or second channels.

20. The heat pipe array according to any one of claims 16 to 19 wherein neighbouring evaporator sections are arranged in a plane such that the array is adapted to remove heat from a flat surface.

21. The heat pipe array according to claim 20 wherein the first channels are curved at least in their adiabatic regions.

22. The heat pipe array of any of one claims 16 to 19 wherein neighbouring evaporator sections are arranged in an arch such that the array is adapted to remove heat from a curved surface.

23. The heat pipe array according to claim 22 wherein the first channels are substantially straight at least in their adiabatic regions.

24. Use of the heat pipe array according to any one of claims 16 to 23, to provide cooling for a device, optionally wherein the device is a nuclear fusion reactor or an electronic device.

**FIGURE 1**

**FIGURE 2**

**FIGURE 3**

Europäisches
Patentamt

European
Patent Office

Office européen
des brevets

# EUROPEAN SEARCH REPORT

**Application Number**

EP 23 21 3462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 732 975 B2 (BATTELLE ENERGY ALLIANCE LLC [US]) 22 August 2023 (2023-08-22) | 1,5,6, 8-14, 16-20,24 | INV. F28D15/02 B33Y80/00 |
| A | * the whole document * | 7,15, 21-23 | F28D15/04 F28F21/08 F28D7/10 |
| X | US 2022/260317 A1 (MORISHITA TAKESHI [JP]) 18 August 2022 (2022-08-18) | 1-6,8,9, 12 | F28D21/00 |
| A | * the whole document * | 7,10,11, 13-15 | |
| X | US 4 909 316 A (KAMEI MITSURU [JP] ET AL) 20 March 1990 (1990-03-20) | 1-6,8,9, 15 | |
| A | * the whole document * | 7,10-14 | |
| A | US 2016/160814 A1 (SAITO YUJI [JP] ET AL) 9 June 2016 (2016-06-09) * abstract; figures 1-6 * | 1-15 | |
| A | FR 2 996 066 A1 (VALEO SYSTEMES THERMIQUES [FR]) 28 March 2014 (2014-03-28) * figures 1-11 * | 1 | |
| A | US 8 066 055 B2 (KROLICZEK EDWARD J [US]; YUN JAMES S [US] ET AL.) 29 November 2011 (2011-11-29) * figures 1-24 * | 1-15 | |

**TECHNICAL FIELDS SEARCHED (IPC)**

F28D
F28F

The present search report has been drawn up for all claims

| Place of search | Date of completion of the search | Examiner |
|---|---|---|
| Munich | 17 April 2024 | Bloch, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 3462

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | | | Publication date | Patent family member(s) | | | Publication date |
|---|---|---|---|---|---|---|---|
| US 11732975 | B2 | | 22-08-2023 | NONE | | | |
| US 2022260317 | A1 | | 18-08-2022 | JP | 2022124278 | A | 25-08-2022 |
| | | | | US | 2022260317 | A1 | 18-08-2022 |
| US 4909316 | A | | 20-03-1990 | GB | 2214287 | A | 31-08-1989 |
| | | | | JP | H0612370 | Y2 | 30-03-1994 |
| | | | | JP | H01101088 | U | 06-07-1989 |
| | | | | US | 4909316 | A | 20-03-1990 |
| US 2016160814 | A1 | | 09-06-2016 | EP | 3037648 | A2 | 29-06-2016 |
| | | | | JP | 2016109132 | A | 20-06-2016 |
| | | | | US | 2016160814 | A1 | 09-06-2016 |
| FR 2996066 | A1 | | 28-03-2014 | NONE | | | |
| US 8066055 | B2 | | 29-11-2011 | US | 2005061487 | A1 | 24-03-2005 |
| | | | | US | 2009200006 | A1 | 13-08-2009 |
| | | | | US | 2012017625 | A1 | 26-01-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1525525 A
- US 2007114008 A
- US 2020064078 A
- WO 2016113255 A
- WO 2022119559 A
- US 20170235349 A
- CN 111660062